# EUROPÄISCHE PATENTANMELDUNG

(11) **EP 0 916 969 A2**
(43) Veröffentlichungstag der Anmeldung: **19.05.1999**
(21) Anmeldenummer: 98120348.2
(22) Anmeldetag: 28.10.1998
(51) Int. Cl.: G01S 15/04

(54) **Autoradioalarmanlage**

(30) Priorität: 11.11.1997 DE 19749747
(71) Anmelder: GRUNDIG Aktiengesellschaft, 90762 Fürth (DE)
(72) Erfinder: Siegert, Claus, c/o Grundig AG, 90762 Fürth (DE); Winkler, Manfred, c/o Grundig AG, 90762 Fürth (DE)

(57) **Zusammenfassung**

Die Erfindung betrifft eine Autoradioanlage mit einem Signalgenerator, einem Mikrocomputer, einem Mikrophon und einem Lautsprecher, wobei vom Signalgenerator Signale erzeugbar sind, die über den Lautsprecher abgestrahlt, vom Mikrophon aufgenommen und dem Mikrocomputer zur Messung von Signallaufzeiten zugeführt werden. Weiterhin weist die Autoradioanlage ein Auslöseelement auf, durch dessen Betätigung der Signalgenerator zur Erzeugung eines Signals vorgegebener Frequenz aktivierbar ist. Nach Betätigung dieses Auslöseelementes führt der Mikrocomputer eine Vielzahl zeitlich aufeinander folgender Laufzeitmessungen durch und steuert beim Vorliegen von unerwünschten Laufzeitänderungen die Auslösung eines Alarmsignals.

## Beschreibung

Die Erfindung betrifft eine Autoradioalarmanlage mit einem Signalgenerator, einem Mikrocomputer, einem Mikrophon und einem Lautsprecher, wobei vom Signalgenerator Signale erzeugbar sind, die über den Lautsprecher abgestrahlt, vom Mikrophon aufgenommen und dem Mikrocomputer zur Messung von Signallaufzeiten zugeführt werden.

Es sind bereits Autoradios bekannt, die mit einem mikroprozessorgestützten Tonsystem zum Messen von Signallaufzeiten versehen sind. Mittels dieses Tonsystems kann der bei einer Wiedergabe von Autoradiosignalen über die Lautsprecher des Radios hervorgerufene Klangeindruck derart verändert werden, daß er an einer gewünschten Stelle im Kraftfahrzeug, beispielsweise am Fahrersitz, subjektiv optimiert ist. Um dies zu erreichen, wird mittels einer Tonsignalquelle ein Tonsignal erzeugt, über die Lautsprecher des Autos wiedergegeben, von einem an der gewünschten Stelle im Fahrzeug angeordneten Mikrophon aufgenommen und dem Mikrocomputer des Autoradios zur Messung der Signallaufzeiten zugeführt. Diese Laufzeitmessung erfolgt für Signale unterschiedlicher Frequenzen und ist unter anderem von den Reflexionsverhältnissen und der Besetzung des Fahrzeugs abhängig. In einem nichtflüchtigen Speicher des Autoradios erfolgt eine Abspeicherung von laufzeitabhängigen Parametern. Diese werden bei der darauffolgenden Wiedergabe von Audiosignalen dazu verwendet, die Audiosignale entsprechend zu verzerren bzw. zu verzögern, um den jeweils gewünschten Klangeindruck zu bekommen.

Der Erfindung liegt die Aufgabe zugrunde, eine neuartige Auto-Alarmanlage anzugeben.

Diese Aufgabe wird bei einer Vorrichtung mit den im Oberbegriff des Anspruchs 1 angegebenen Merkmalen durch die im kennzeichnenden Teil des Anspruchs 1 angegebenen Merkmale gelöst. Vorteilhafte Ausgestaltungen und Weiterbildungen der Erfindung ergeben sich aus den abhängigen Patentansprüchen.
Die Vorteile der Erfindung bestehen insbesondere darin, daß das zum Zwecke von Laufzeitmessungen ohnehin vorhandene Equipment zusätzlich zur Schaffung einer Autoradioalarmanlage verwendet werden kann, so daß keinerlei zusätzliche Bauteile notwendig sind. Dadurch kommt ein Benutzer, der sich zum Kauf eines Autoradios mit den im Oberbegriff des Anspruchs 1 angegebenen Merkmalen entschließt, ohne weitere Kosten zusätzlich in den Besitz einer Auto-Alarmanlage. Insbesondere entfällt auch die Notwendigkeit eines zusätzlichen Einbaus der Alarmanlage in das Auto.

Durch die Merkmale des Anspruchs 2 wird die Anzahl der zur Realisierung der Erfindung notwendigen Bauteile reduziert. Weiterhin entfällt die Notwendigkeit einer Signalverbindung zwischen dem Signalgenerator und dem Mikrocomputer, wie sie bei einer getrennten Realisierung der genannten Bauteile notwendig wäre. Außerdem ist eine besonders kompakte Realisierung einer Autoradioalarmanlage gemäß der Erfindung aufgezeigt.

Der Vorteil der Merkmale des Anspruches 4 besteht darin, daß das vom Signalgenerator ausgestrahlte Signal für den menschlichen Hörapparat nicht bzw. fast nicht wahrnehmbar ist.

Mittels der Merkmale des Anspruchs 5 wird erreicht, daß der Benutzer frei entscheiden kann, ob und wann er die Auto-Alarmanlage aktivieren möchte.
Eine Aktivierung bzw. ein Schärfen der Auto-Alarmanlage erfolgt automatisch immer dann, wenn das Auto mittels des Fahrzeugschlüssels abgesperrt wird, wobei dieses Absperren durch ein Drehen des Fahrzeugschlüssels oder durch ein mittels des Fahrzeugschlüssels ausgegebenes Infrarot-Fernsteuersignal erfolgen kann.

Die Vorteile der Merkmale des Anspruchs 6 bestehen darin, daß der Fahrer nach der Betätigung des Auslöseelements noch genügend Zeit zum Verlassen des Fahrzeugs hat, ohne daß die Alarmanlage ein Alarmsignal ausgibt.

Im Anspruch 7 sind verschiedene bevorzugte Ausführungsbeispiele für das vom Signalgenerator erzeugte Signal vorgegebener Frequenz angegeben.

Mittels der Merkmale des Anspruchs 9 wird erreicht, daß unter anderem langsame Veränderungen der Signallaufzeiten, die durch natürliche Einflüsse, wie Licht, Wärme, Materialausdehnung, usw., hervorgerufen werden können, nicht als unerwünschte Laufzeitänderungen angesehen werden.Außerdem werden schnell erfolgende Laufzeitänderungen, die zur Auslösung eines Alarmsignals führen, unter anderem durch eine Bewegung des Autos, wie sie bei einem Fahrzeugdiebstahl auftritt, durch ein Einschlagen einer Fahrzeugscheibe oder durch das Eindringen einer Person in den Fahrzeuginnenraum, was jeweils zu Änderungen im Reflexionsverhalten im Fahrzeuginnenraum führt, hervorgerufen.

In den Ansprüchen 10 bis 11 ist angegeben, wie das erzeugte Alarmsignal ausgegeben werden kann. Insbesondere die Ausgabe über eine Telefonverbindung, wie sie im Anspruch 11 angegeben ist, ermöglicht ein schnelles Herbeiholen von Hilfe, beispielsweise der Polizei.

Die Ansprüche 12 und 13 betreffen die Deaktivierung der Alarmanlage, so daß der Fahrer den Innenraum des Fahrzeugs wieder betreten kann, ohne daß Alarmsignale ausgegeben werden.

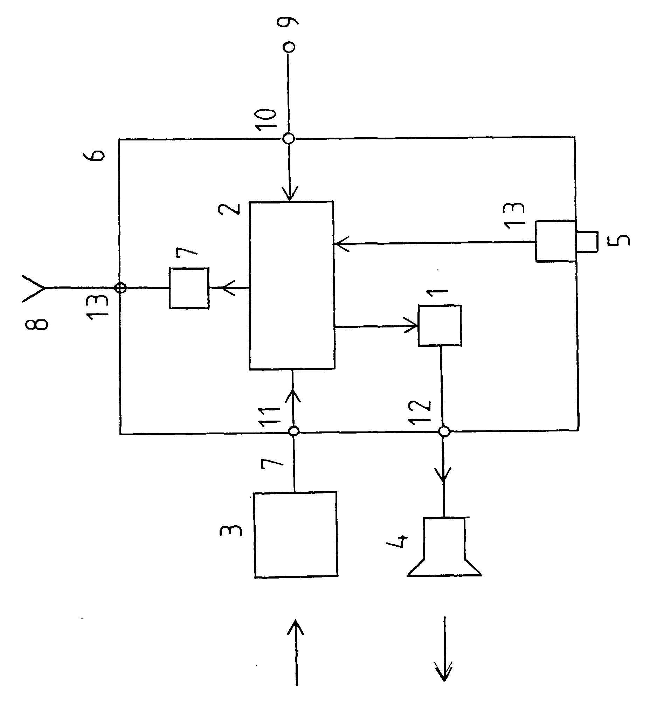

Weitere vorteilhafte Eigenschaften der Erfindung ergeben sich aus der Erläuterung eines Ausführungsbeispiels anhand der Figur.

Diese zeigt die zum Verständnis der Erfindung notwendigen Bauteile einer Autoradioalarmanlage. Zu dieser gehört ein Autoradiogehäuse 6, in welchem ein Mikrocomputer 2, ein Autotelefon 7 und ein Signalgenerator 1 vorgesehen sind. Das Autoradio ist mittels einer Bedieneinheit 13 bedienbar, welcher eine Auslösetaste 5 angehört. Das Autoradiogehäuse weist einen Anschluß 13 für eine Autotelefonsende- und -empfangsantenne 8, einen Mikrophonanschluß 11 und einen Lautsprecherausgang 12 auf. An dem Mikrophonanschluß 11 ist über ein Signalkabel 7 oder über eine Infrarotverbindung ein Mikrophon 3 angeschlossen. Der Signalgenerator 1 ist über den Lautsprecherausgang 12 mit einem Lautsprecher 4 verbunden.

Der Signalgenerator 1 kann - wie in der Figur dargestellt - ein eigenständiges, vom Mikrocomputer 2 angesteuertes Bauteil sein oder auch ein integraler Bestandteil dieses Mikrocomputers.

Die gezeigte Autoradioalarmanlage funktioniert wie folgt:

Möchte der Benutzer die Alarmanlage aktivieren bzw. schärfen, dann betätigt er kurz vor dem Aussteigen aus dem Auto die Auslösetaste 5 auf der Bedieneinheit 13. Diese Information wird dem Mikrocomputer 2 zugeführt.
Dieser startet ein internes Zeitglied, welches beispielsweise auf ein Zeitintervall von zwei Minuten eingestellt ist. Dieses Zeitintervall ist so dimensioniert, daß der Fahrer nach der Betätigung der Auslösetaste noch genügend Zeit hat, um den Wagen zu verlassen, benötigte Gegenstände aus dem Kofferraum zu entnehmen und das Auto mittels des Autoschlüssels zu verschließen.

Nach dem Ablauf des genannten Zeitintervalls erfolgt zunächst eine Referenzmessung. Zur Durchführung dieser Referenzmessung steuert der Mikrocomputer 2 den Signalgenerator 1 zur Erzeugung eines Schallsignals an. Bei diesem Schallsignal handelt es sich in vorteilhafter Weise um ein Ultraschallsignal, bzw. um ein Schallsignal im oberen hörbaren Frequenzbereich oder ein Schallsignal in einem Frequenzbreich, welcher durch den Signalgenarator erzeugt werden kann. Im weiteren Teil der Beschreibung wird aber beispielhaft die Ausführung anhand eines ultraschallsignals beschrieben. Dieses wird über den Ausgang 12 dem Lautsprecher 4 zugeführt und von diesem abgestrahlt, wie es in der Figur durch einen Pfeil angedeutet ist. Die von den Fahrzeugbegrenzungselementen und den anderen Gegenständen im Fahrzeuginnenraum reflektierten Ultraschallsignale werden vom Mikrophon 3 aufgenommen, welches an einer gewünschten Stelle im Fahrzeuginnenraum positioniert ist. Beispielsweise kann das Mikrophon auf den Fahrzeugboden gelegt oder an der Fahrer-Sonnenblende befestigt werden oder auch am Autoradiogehäuse 6 angeordnet sein.

Die vom Mikrophon aufgenommenen Ultraschallsignale werden dem Mikrocomputer 2 zugeführt, welcher Laufzeit-Referenzmessungen durchführt und die ermittelten Werte als Referenzwerte abspeichert.

Nach Durchführung dieser Referenzmessungen steuert der Mikrocomputer 2 den Signalgenerator 1 zur weiteren Erzeugung von Ultraschallsignalen an, die über den Lautsprecher 4 abgestrahlt werden. Diese Ultraschallsignale werden in Form eines Dauersignals, eines intervallförmigen Signals oder auch in Form eines Tonfolgesignals abgestrahlt, welches Tonfolgesignal Signalanteile mit unterschiedlichen Frequenzen aufweist, die jedoch alle im Ultraschall-Frequenzbereich liegen.
Diese weiteren Ultraschallsignale bzw. die daraus resultierenden, von den Fahrzeugbegrenzungswänden und den anderen Gegenständen im Fahrzeuginnenraum reflektierten Ultraschallsignale werden ebenfalls vom Mikrophon 3 aufgenommen und dem Mikrocomputer 2 zugeführt. Dieser führt in vorgebbaren Zeitintervallen wiederholt Laufzeitmessungen durch und vergleicht die jeweils ermittelten Laufzeitwerte mit den abgespeicherten Referenzwerten.

Ergibt dieser Vergleich, daß die jeweils ermittelten Laufzeitwerte mit den abgespeicherten Referenzwerten übereinstimmen, dann wird daraus geschlossen, daß sich im Fahrzeuginnenraum keine unerwünschten Vorgänge abgespielt haben.

Ergibt dieser Vergleich hingegen, daß die ermittelten Laufzeitwerte von den abgespeicherten Referenzwerten abweichen, dann wird daraus geschlossen, daß sich im Fahrzeuginnenraum unerwünschte Vorgänge abgespielt haben. Derartige unerwünschte Vorgänge bestehen beispielsweise darin, daß eine Fahrzeugscheibe eingeschlagen wird, daß eine Person in den Fahrzeuginnenraum eindringt oder daß das Fahrzeug insgesamt bewegt wird. Dies führt stets dazu, daß sich die Reflexionseigenschaften im Fahrzeuginnenraum verändern, was zu den oben genannten Laufzeitänderungen führt, die vom Mikrocomputer erkannt werden.

Erkennt der Mikrocomputer derartige unerwünschte Laufzeitänderungen, dann steuert er den Signalgenerator 1 zur Abgabe eines Alarmsignals an, welches mit der maximal möglichen Lautstärke über den Lautsprecher 4 wiedergegeben wird. Zusätzlich oder alternativ dazu initiiert der Mikrocomputer 2 auch die Ausgabe eines Alarmsignals über die Hupe des Autos oder eine andere und/oder weitere Alarmierungseinheit des Autos.

Ist das Auto in bewohnten Ortsteilen abgestellt, dann können diese Alarmsignale von Anwohnern gehört werden, die dann die Polizei verständigen oder ggf. auch selbst den oder die Täter ergreifen können.
Ferner besteht auch eine hohe Wahrscheinlichkeit, daß der oder die Täter beim Ertönen des Alarmsignals sofort die Flucht ergreifen, ohne erst im Fahrzeug nach Wertgegenständen zu suchen.

Gemäß einer vorteilhaften Weiterbildung der Erfindung steuert der Mikrocomputer beim Erkennen von unerwünschten Laufzeitänderungen auch das Autotelefon 7 an, so daß automatisch eine dort abgespeicherte Notrufnummer gewählt und eine zugehörige Telefonverbindung aufgebaut wird. Auf diese Weise kann auch über die Autotelefonantenne 8 ein Notrufsignal entweder an die Polizei oder an eine Notrufzentrale geschickt werden. Dieses Notrufsignal ist von Informationen begleitet, die Auskunft über den momentanen Standort des Fahrzeugs geben und beispielsweise von einem im Fahrzeug befindlichen GPS-Empfänger abgeleitet sind. So kann verzögerungsfrei Hilfe zum Fahrzeug, das die Notrufsignal aussendet, geschickt werden.

Nach einer weiteren Ausführungsform der Erfindung werden die vorstehend beschriebenen Laufzeitmessungen nicht unter Verwendung von im Ultraschallbereich liegenden Signalen durchgeführt, sondern anhand von Signalen, die in einem Frequenzbereich liegen, der kleiner ist als 20 Hz. Die in diesem Frequenzbereich liegenden Signale sind für das menschliche Gehör kaum wahrnehmbar, so daß auch bei derartigen Signalen keine unerwünschte Lärmbelästigung auftritt, wenn die Autoradioalarmanlage geschärft ist.

Das Schärfen der Autoradioalarmanlage kann auch mittels eines anderen Auslöseelementes erfolgen, beispielsweise mittels des Fahrzeugschlüssels. Wird nach dem Verlassen des Fahrzeugs eine Fahrzeugtüre mittels des Fahrzeugschlüssels zugesperrt, dann gelangt diese Information über das Bordsystem des Fahrzeugs und den in der Figur gezeigten Anschluß 9 an den Eingang 10 des Autoradios und von dort aus an den Mikrocomputer 2.
Dieser steuert dann - wie oben beschrieben - den Signalgenerator 1 zur Erzeugung der genannten Signale an, um die Referenzmessungen durchführen zu können.

Die gezeigte Autoradioalarmanalge weist in vorteilhafter Weise auch ein Deaktivierungselement auf, durch dessen Betätigung ein Entschärfen der Alarmanlage erfolgt, d.h. ein Deaktivieren des Signalgenerators bzw. ein Unterdrücken der Auslösung eines Alarmsignals. Dieses Deaktivierungselement ist vorzugsweise ebenfalls der Fahrzeugschlüssel, wobei das Entschärfen der Alarmanlage durch das Aufsperren einer Fahrzeugtüre erfolgt. Die zugehörige Deaktivierungsinformation wird dem Mikrocomputer 2 über das Bordsystem des Fahrzeugs, den Anschluß 9 und den Eingang 10 des Autoradiogehäuses zugeführt.

Gemäß einer vorteilhaften Weiterbildung der Erfindung ist der Mikrocomputer 2 derart programmiert, daß er bei langsam erfolgenden Laufzeitänderungen die Auslösung eines Alarmsignals unterdrückt und nur bei schnell erfolgenden Laufzeitänderungen die Auslösung eines Alarmsignals initiiert. Durch diese Programmierung des Mikrocomputers wird erreicht, daß Laufzeitänderungen, die auf natürliche Gegebenheiten zurückzuführen sind, ignoriert werden. Derartige natürliche Gegebenheiten können beispielsweise Temperaturveränderungen im Fahrzeuginnenraum sein, die in Verbindung mit einer Materialausdehnung von im Innenraum des Fahrzeug aufbewahrten Gegenständen stehen können.

## Patentansprüche

1. Autoradioanlage mit einem Signalgenerator, einem Mikrocomputer, einem Mikrophon und einem Lautsprecher, wobei vom Signalgenerator Signale erzeugbar sind, die über den Lautsprecher abgestrahlt, vom Mikrophon aufgenommen und dem Mikrocomputer zur Messung von Signallaufzeiten zugeführt werden,
**dadurch gekennzeichnet, daß**
sie weiterhin ein Auslöseelement (5) aufweist, durch dessen Betätigung der Signalgenerator (1) zur Erzeugung eines Signals vorgegebener Frequenz aktivierbar ist, daß der Mikrocomputer (2) nach Betätigung des Auslöseelementes (5) eine Vielzahl zeitlich aufeinander folgender Laufzeitmessungen durchführt und beim Vorliegen von unerwünschten Laufzeitänderungen die Auslösung eines Alarmsignals steuert.

2. Autoradioanlage nach Anspruch 1,
**dadurch gekennzeichnet, daß**
der Signalgenerator (1) Bestandteil des Mikrocomputers ist und/oder der Mikrocomputer in einem Autoradiogehäuse (6) angeordnet ist und/oder das Mikrophon am Autoradiogehäuse angeordnet ist.

3. Autoradioanlage nach Anspruch 1 oder 2,
**dadurch gekennzeichnet, daß**
das Mikrophon mit dem Autoradio über ein Signalkabel (7) oder über eine Infrarotverbindung verbunden ist.

4. Autoradioanlage nach einem oder mehreren der vorhergehenden Ansprüche,
**dadurch gekennzeichnet, daß**
das Signal vorgegebener Frequenz ein Ultraschallsignal ist oder das Signal vorgegebener Frequenz in einem Frequenzbereich liegt, der kleiner ist als 20 Hz.

5. Autoradioanlage nach einem oder mehreren der vorhergehenden Ansprüche,
**dadurch gekennzeichnet, daß**
das Auslöseelement eine am Autoradiogehäuse angeordnete Bedientaste (5) ist und/oder das Auslöseelement ein Fahrzeugschlüssel ist.

6. Autoradioanlage nach einem oder mehreren der vorhergehenden Ansprüche,
**dadurch gekennzeichnet, daß**
sie ein Zeitglied (2) aufweist, welches durch die Betätigung des Auslöseelements gestartet wird, und daß die Aktivierung des Signalgenerators zur Erzeugung des Signals vorgegebener Frequenz erst nach Ablauf des durch das Zeitglied vorgegebenen Zeitintervalls erfolgt.

7. Autoradioanlage nach einem oder mehreren der vorhergehenden Ansprüche,
**dadurch gekennzeichnet, daß**
das Signal vorgegebener Frequenz ein Dauersignal ist oder das Signal vorgegebener Frequenz ein intervallförmiges Signal ist oder das Signal vorgegebener Frequenz ein Tonfolgesignal ist.

8. Autoradioanlage nach einem oder mehreren der vorhergehenden Ansprüche,
**dadurch gekennzeichnet, daß**
die aufeinanderfolgenden Laufzeitmessungen in vorgebbaren Zeitintervallen erfolgen.

9. Autoradioanlage nach einem oder mehreren der vorhergehenden Ansprüche,
**dadurch gekennzeichnet, daß**
der Mikrocomputer derart programmiert ist, daß er bei langsam erfolgenden Laufzeitänderungen die Auslösung eines Alarmsignals unterdrückt und/oder der Mikrocomputer derart programmiert ist, daß er bei schnell erfolgenden Laufzeitänderungen die Auslösung eines Alarmsignals initiiert und/oder bei einer Bewegung des Autos ein Alarmsignal ausgelöst wird und/oder beim Einschlagen einer Fahrzeugscheibe ein Alarmsignal ausgelöst wird und/oder beim Eindringen einer Person in den Fahrzeuginnenraum ein Alarmsignal ausgelöst wird.

10. Autoradioanlage nach einem oder mehreren der vorhergehenden Ansprüche,
**dadurch gekennzeichnet, daß**
das Alarmsignal über den Lautsprecher (4) ausgegeben wird und/oder das Alarmsignal mittels der Hupe des Fahrzeugs ausgegeben wird.

11. Autoradioanlage nach einem oder mehreren der vorhergehenden Ansprüche,
**dadurch gekennzeichnet, daß**
Alarmsignal zusammen mit Standortinformationen über ein Telefon (7) ausgegeben wird und das Telefon integraler Bestandteil des Autoradiogehäuses (6) ist.

12. Autoradioanlage nach einem oder mehreren der vorhergehenden Ansprüche,
**dadurch gekennzeichnet, daß**
sie ein Deaktivierungselement aufweist, durch dessen Betätigung der Signalgenerator (1) deaktivierbar und/oder die Auslösung des Alarmsignals unterdrückbar ist.

13. Autoradioanlage nach Anspruch 12,
**dadurch gekennzeichnet, daß**
das Deaktivierungselement der Fahrzeugschlüssel ist.
